# EUROPÄISCHE PATENTSCHRIFT

(11) **EP 3 774 499 B1**
(45) Veröffentlichungstag und Bekanntmachung des Hinweises auf die Patenterteilung: **18.10.2023**
(21) Anmeldenummer: 19711810.2
(22) Anmeldetag: 27.02.2019
(51) Int. Cl.: B62D 15/02, G06T 11/00, G06T 15/20, G08G 1/00, G05D 1/02, B62D 1/00, G05D 1/00, G06T 15/04

(54) **VERFAHREN ZUR ÜBERWACHUNG UND STEUERUNG EINES FERNBEDIENTEN PARK- ODER MANÖVRIERVORGANGS EINES FAHRZEUGS**
METHOD FOR MONITORING AND CONTROLLING A REMOTELY-CONTROLLED PARKING OR MANEUVERING OPERATION OF A VEHICLE
PROCÉDÉ DE SURVEILLANCE ET DE COMMANDE D'UNE OPÉRATION DE STATIONNEMENT OU DE MANOEUVRE TÉLÉ-COMMANDÉE D'UN VÉHICULE

(30) Priorität: 26.03.2018 DE 102018204569
(43) Veröffentlichungstag der Anmeldung: 17.02.2021
(73) Patentinhaber: Continental Autonomous Mobility Germany GmbH, 85057 Ingolstadt (DE)
(72) Erfinder: FRIEBE, Markus, 90411 Nürnberg (DE); EDLING, Frank, 90411 Nürnberg (DE)
(74) Vertreter: Continental Corporation
(86) Internationale Anmeldenummer: PCT/DE2019/200020
(87) Internationale Veröffentlichungsnummer: WO 2019/185097

(56) Entgegenhaltungen:
- EP-A1- 1 179 958
- DE-A1-102009 048 492
- DE-A1-102012 007 984
- DE-A1-102015 215 918
- US-A1- 2010 134 519

## Beschreibung

Die Erfindung betrifft ein Verfahren zur Überwachung und Steuerung eines fernbedienten Park- oder Manövriervorgangs eines Fahrzeugs.

Aus dem Stand der Technik sind Parkassistenzsysteme für Fahrzeuge bekannt, mittels denen Parkvorgänge automatisiert bzw. teilautomatisiert vollzogen werden können. Derartige Parkvorgänge können beispielsweise Einpark- oder Ausparkvorgänge sein. Hierbei können unterschiedliche Parksituationen auftreten, beispielsweise Parallel-Parksituationen, in denen das Fahrzeug parallel oder im Wesentlichen parallel zur Fahrbahn in eine bzw. aus einer Parklücke manövriert wird oder Senkrecht- bzw. Schräg-Parksituationen, in denen das Fahrzeug in eine quer zur Fahrbahn ausgerichtete Parklücke ein- bzw. ausgeparkt wird.

Ferner ist bekannt, derartige Parkvorgänge fernbedient durchzuführen, d.h. der Fahrzeugnutzer befindet sich nicht innerhalb des Fahrzeugs sondern außerhalb dessen und beabstandet zu diesem.

Nachteilig bei der Durchführung von fernbedienten Parkvorgängen ist, dass der Fahrzeugnutzer Bereiche in der Umgebung des Fahrzeugs, die durch das Fahrzeug verdeckt sind, nicht einsehen kann. Steht der Fahrzeugnutzer beispielsweise bei einem Rückwärts-Einparkvorgang vor der Front des Fahrzeugs, kann er beispielsweise den Umgebungsbereich hinter dem Fahrzeug nicht einsehen. Dadurch kann es zu unerwünschten Abbrüchen des automatischen Parkvorgangs oder aber im ungünstigsten Fall zu Kollisionen kommen.

Die Druckschrift DE 10 2012 007 984 A1 bezieht sich auf ein Rangiersystem und ein Verfahren zum Rangieren eines Kraftfahrzeugs.

DE 10 2012 007 984 A1 offenbart ein Verfahren zur Überwachung und Steuerung eines fernbedienten Park- oder Manövriervorgangs eines Fahrzeugs, umfassend folgende Schritte: - Erfassen von Bildinformationen im Umgebungsbereichs des Fahrzeugs durch zumindest zwei Kameras des Fahrzeugs; - Erstellen von vogelperspektivischen Umgebungsinformationen basierend auf den Bildinformationen der zumindest zwei Kameras; - Darstellen der vogelperspektivischen Umgebungsinformationen an einem mobilen Fernbediengerät; - Steuern des Park- oder Manövriervorgangs mittels des mobilen Fernbediengeräts basierend auf den vogelperspektivischen Umgebungsinformationen.

Die Druckschrift DE 10 2009 048 492 A1 betrifft ein Verfahren zum Unterstützen eines Fahrers beim Führen eines Fahrzeugs mittels eines tragbaren Kommunikationsgeräts.

Die Druckschrift DE 10 2015 215 918 A1 offenbart ein Einparksystem mit interaktiver Trajektorienoptimierung.

Ausgehend hiervon ist es Aufgabe der Erfindung, ein Verfahren zur Steuerung eines fernbedienten Parkvorgangs anzugeben, das eine sicherere Steuerung des Parkvorgangs mit verbesserten Überwachungsmöglichkeiten für den Fahrzeugnutzer ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein Fahrassistenzsystem ist Gegenstand des nebengeordneten Patentanspruchs 9 und ein Fahrzeug mit einem solchen Fahrassistenzsystem ist Gegenstand des Patentanspruchs 10.

Gemäß einem ersten Aspekt bezieht sich die Erfindung auf ein Verfahren zur Überwachung und Steuerung eines fernbedienten Park- oder Manövriervorgangs eines Fahrzeugs. Das Verfahren umfasst dabei die folgenden Schritte:
Zunächst werden Bildinformationen im Umgebungsbereich des Fahrzeugs durch zumindest zwei Kameras des Fahrzeugs erfasst. Die Kameras sind vorzugsweise derart verteilt an dem Fahrzeug vorgesehen, dass durch diese zumindest abschnittsweise unterschiedliche Raumbereiche in der Umgebung des Fahrzeugs erfassbar sind. Die Kameras sind vorzugsweise Kameras eines Rund-um-Sicht-Systems des Fahrzeugs.

Aus diesen erfassten Bildinformationen werden anschließend dreidimensionale Umgebungsinformationen erzeugt, die als räumlich perspektivische Umgebungsinformationen auf einer Anzeigeeinheit darstellbar sind. Die räumlich perspektivischen Umgebungsinformationen stellen dabei einen Ausschnitt aus den dreidimensionalen Umgebungsinformationen dar und beziehen sich auf einen Bezugs- bzw. Betrachtungspunkt, von dem aus die Umgebung im Bereich des Fahrzeugs betrachtet wird. Die dreidimensionalen Umgebungsinformationen werden durch Zusammenfügen der von unterschiedlichen Kameras bereitgestellten Bildinformationen und ggf. durch ein Anpassen dieser Bildinformationen erhalten.

Die räumlich perspektivischen Umgebungsinformationen werden anschließend an einem mobilen Fernbediengerät angezeigt. Dadurch kann der außerhalb des Fahrzeugs befindliche Fahrzeugnutzer, der das Fernbediengerät hält, die auf der Anzeigeeinheit des mobilen Fernbediengeräts dargestellten räumlich perspektivischen Umgebungsinformationen optisch wahrnehmen.

Unterstützt durch die räumlich perspektivischen Umgebungsinformationen kann der Fahrzeugnutzer anschließend den Park- oder Manövriervorgang mittels des mobilen Fernbediengeräts steuern.

Der wesentliche Vorteil des erfindungsgemäßen Verfahrens besteht darin, dass dem Fahrzeugnutzer eine verbesserte optische Überwachung des Park- oder Manövriervorgangs ermöglicht wird und dieser damit den Park- oder Manövriervorgang mit einer höheren Sicherheit steuern kann.

Gemäß einem Ausführungsbeispiel ist in den räumlich perspektivischen Umgebungsinformationen zumindest ein Teil der Außenkonturen des Fahrzeugs erkennbar. Anders ausgedrückt ist in den räumlich perspektivischen Umgebungsinformationen damit auch die Lage zumindest eines Abschnitts des Fahrzeugs relativ zu dessen Umgebungsbereich erkennbar. Dadurch lässt sich eine sicherere Steuerung des Park- oder Manövriervorgangs erreichen, da beispielsweise erkennbar wird, wie nahe ein Fahrzeug beispielsweise einem Objekt in dessen Umgebung kommt.

Erfindungsgemäß umfasst die Darstellung der räumlich perspektivischen Umgebungsinformationen eine zumindest teilweise transparente Darstellung des Fahrzeugs oder dessen Außenkontur, so dass ein Umgebungsbereich, der sich bezogen auf den Bezugspunkt der perspektivischen Ansicht der Umgebungsinformationen verdeckt hinter dem Fahrzeug befindet, zumindest teilweise sichtbar wird. In anderen Worten wird ein "virtuelles Hindurchschauen" durch das Fahrzeug ermöglicht. Dies kann beispielsweise dadurch erreicht werden, dass die perspektivische Silhouette des Fahrzeugs zumindest teilweise transparent dargestellt wird und der Umgebungsbereich, der eigentlich verdeckt hinter dem Fahrzeug liegt, im Bereich dieser transparenten Fahrzeugsilhouette angezeigt wird. Dadurch kann dem Fahrzeugnutzer ein wesentlich höheres Sicherheitsgefühl bei der Steuerung des Park- oder Manövriervorgangs vermittelt werden, da dieser auch durch das Fahrzeug eigentlich verdeckte Bereiche wahrnehmen kann, ohne seinen Standort wechseln zu müssen.

Gemäß einem Ausführungsbeispiel wird der Bezugspunkt der dargestellten räumlich perspektivischen Umgebungsinformationen basierend auf der örtlichen Lage des mobilen Fernbediengeräts und dessen Ausrichtung gewählt. Vorzugsweise werden die Raumkoordinaten (z.B. x-, y-, z-Koordinaten), an denen sich das Fernbediengerät befindet, verwendet, um den Standort des Fahrzeugnutzers und damit seinen perspektivischen Betrachtungspunkt, von dem aus er die Umgebung um das Fahrzeug herum wahrnimmt, zu bestimmen. Vorzugsweise werden auch Winkelinformationen anhand einer im Fernbediengerät vorhandenen Sensorik bestimmt, um die Neigungs- bzw. Schwenkwinkel des Fernbediengeräts feststellen zu können. Dies können insbesondere zumindest zwei Neigungs- bzw. Schwenkwinkel sein, und zwar Winkel bezogen auf zwei Raumachsen, die eine vertikale Ebene im Raum aufspannen. Weiterhin kann auch ein dritter Neigungs- bzw. Schwenkwinkel bestimmt werden, beispielsweise ein Winkel in Bezug auf eine Raumachse, die senkrecht zu der vertikalen Ebene im Raum verläuft. Durch die Wahl des Bezugspunkts unter Berücksichtigung der der örtlichen Lage und Ausrichtung des Fernbediengeräts kann auf der Anzeigeeinheit des Fernbediengeräts der Umgebungsbereich dargestellt werden, der der Lage und Ausrichtung des Fernbediengeräts entspricht. Anders ausgedrückt bildet damit die Anzeigeeinheit des Fernbediengeräts eine Art virtuellen Bilderrahmen, in dem der der Lage und Ausrichtung des Fernbediengeräts entsprechende Ausschnitt des Umgebungsbereichs dargestellt wird.

Gemäß einem Ausführungsbeispiel ist der Zoomfaktor der räumlich perspektivischen Umgebungsinformationen an dem mobilen Fernbediengerät veränderbar. Dadurch kann der Fahrzeugnutzer beispielsweise einen bestimmten Umgebungsbereich des Fahrzeugs durch eine entsprechende Eingabe an dem Fernbediengerät vergrößert darstellen lassen, um beispielsweise ein bestimmtes Detail besser erkennen zu können.

Gemäß einem Ausführungsbeispiel ist der Bezugspunkt der dargestellten räumlich perspektivischen Umgebungsinformationen durch eine Benutzereingabe am mobilen Fernbediengerät veränderbar. In anderen Worten kann durch eine entsprechende Eingabe der Bezugspunkt bzw. Betrachtungspunkt, der zunächst beispielsweise anhand der örtlichen Lage und Ausrichtung des Fernbediengeräts gewählt wurde, aktiv verändert werden, und zwar ohne räumliche Veränderung des Standorts des Fahrzeugnutzers selbst. Dadurch kann der Fahrzeugnutzer sich den Umgebungsbereich aus einem anderen Blickwinkel darstellen lassen, um beispielsweise Bereiche in der Umgebung des Fahrzeugs aus einer anderen Blickrichtung betrachten zu können.

Gemäß einem Ausführungsbeispiel werden die Darstellung der räumlich perspektivischen Umgebungsinformationen mit Informationen überlagert werden, die von einer weiteren Sensorik, insbesondere einer Abstandssensorik erfasst wurden. So können beispielsweise optische Indikatoren in Form von Balken o.ä. in die räumlich perspektivischen Umgebungsinformationen eingefügt werden, wenn der Abstand des Fahrzeugs zu einem Objekt einen Mindestabstand unterschreitet. Je nach Abstand können die optischen Indikatoren auch unterschiedliche Farben aufweisen. Die Lage der eingefügten optischen Indikatoren wird vorzugsweise derart gewählt, dass diese der Lage des Objekts entspricht, zu dem der Mindestabstand unterschritten wurde. Dadurch lässt sich die Steuerungssicherheit weiter erhöhen.

Gemäß einem Ausführungsbeispiel werden die am mobilen Fernbediengerät dargestellten, räumlich perspektivischen Umgebungsinformationen durch eine fahrzeugseitige Steuereinheit bereitgestellt und über einen drahtlosen Kommunikationskanal an das mobile Fernbediengerät übertragen. Vorzugsweise werden zunächst Informationen hinsichtlich der örtlichen Lage und Ausrichtung des Fernbediengeräts vom Fernbediengerät an das Fahrzeug übertragen. Dieses ermittelt daraus den Bezug- bzw. Betrachtungspunkt, von dem aus die Umgebung des Fahrzeugs auf der Anzeigeeinheit des Fernbediengeräts dargestellt werden soll. Die daraus resultierenden räumlich perspektivischen Umgebungsinformationen (die ein Ausschnitt der gesamten dreidimensionalen Umgebungsinformationen sind) werden vom Fahrzeug über einen drahtlosen Kommunikationskanal an das Fernbediengerät übertragen, um diese räumlich perspektivischen Umgebungsinformationen auf dessen Anzeigeeinheit darstellen zu können.

In einem alternativen Ausführungsbeispiel werden die von den Kameras des Fahrzeugs ermittelten Bildinformationen über einen drahtlosen Kommunikationskanal an das mobile Fernbediengerät übertragen und eine Rechnereinheit des mobile Fernbediengeräts erzeugt die räumlich perspektivischen Umgebungsinformationen basierend auf den Bildinformationen. In anderen Worten werden über den zwischen dem Fernbediengerät und dem Fahrzeug vorhandenen drahtlosen Kommunikationskanal Bildformationen, die von den einzelnen Kameras des Fahrzeugs bereitgestellt werden, direkt an das Fernbediengerät übertragen und erst dort werden die dreidimensionalen Umgebungsinformationen erzeugt und die auf der Anzeigeeinheit darzustellenden räumlich perspektivischen Umgebungsinformationen bestimmt.

Gemäß einem weiteren Aspekt betrifft die Erfindung ein Fahrassistenzsystem für ein Fahrzeug. Das Fahrassistenzsystem umfasst die Merkmale des Anspruchs 9.

Das mobile Fernbediengerät weist zudem Steuermittel auf, über die das fahrerlose Fahrmanöver basierend auf den angezeigten räumlich perspektivischen Umgebungsinformationen steuerbar ist.

Zuletzt umfasst die Erfindung ein Fahrzeug mit einem vorbeschriebenen Fahrassistenzsystem.

Unter "Parkvorgang" im Sinne der vorliegenden Erfindung werden jegliche Bewegungen des Fahrzeugs zum Einnehmen einer Parkstellung oder zum Herausbewegen aus einer Parkstellung verstanden, also insbesondere Ein- und Ausparkvorgänge.

Unter "Fernbediengerät" im Sinne der vorliegenden Erfindung wird jegliche Einheit verstanden, die dem Fahrzeugnutzer zugeordnet werden kann, insbesondere das dieser mit sich führen kann. Derartige Geräte können beispielsweise Fahrzeugschlüssel, Fahrzeugkarten, Handys, Smartphones, Tablet-PCs, Laptops oder andere tragbare Einheiten, insbesondere Telekommunikationsgeräte sein.

Unter "räumlich perspektivischen Umgebungsinformationen" wird ein Ausschnitt aus dreidimensionalen Umgebungsinformationen verstanden, der angibt, wie die Umgebung von einem bestimmten Bezugspunkt aus betrachtet von einem Betrachter wahrgenommen wird. Die räumlich perspektivischen Umgebungsinformationen lassen sich auf einer herkömmlichen Anzeigeeinheit, beispielsweise einem Display eines mobilen Telekommunikationsgeräts, anzeigen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und schematisch eine Einparksituation in eine Parklücke, wobei sich der Fahrzeugnutzer außerhalb des Fahrzeugs befindet;
- Fig. 2: beispielhaft und schematisch ein Blockdiagramm eines ein Fahrassistenzsystem aufweisenden Fahrzeugs;
- Fig. 3: beispielhaft und schematisch eine perspektivische Darstellung von dreidimensionalen Umgebungsinformationen im Umgebungsbereich des Fahrzeugs;
- Fig. 4: beispielhaft und schematisch eine perspektivische Darstellung der Einparksituation gemäß Fig. 1, wie sie der Fahrzeugnutzer direkt (ohne Anzeige am Fernbediengerät) optisch wahrnimmt;
- Fig. 5: schematisch eine beispielhafte erste Darstellung der Einparksituation gemäß Fig. 1 mit einer teilweise transparenten Fahrzeugsilhouette, wie sie auf dem Fernbediengerät dargestellt wird;
- Fig. 6: schematisch eine beispielhafte zweite Darstellung der Einparksituation gemäß Fig. 1, wie sie auf dem Fernbediengerät dargestellt wird;
- Fig. 7: beispielhaft die Darstellung der Einparksituation auf dem Fernbediengerät gemäß Fig. 5 mit einem Steuermittel zur Veränderung des Bezugspunkts der räumlich perspektivischen Darstellung; und
- Fig. 8: beispielhaft eine schematische Funktionsdarstellung eines Fahrzeugs und eines mit dem Fahrzeug gekoppelten Fernbediengeräts.

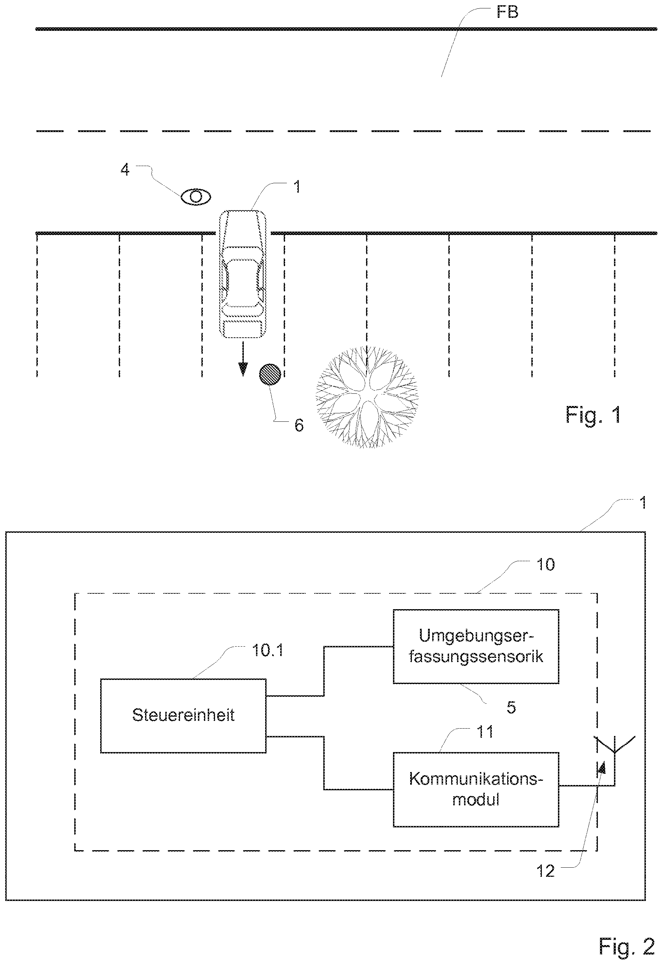

Figur 1 zeigt beispielhaft und schematisch ein Parkszenario, bei dem ein Fahrmanöver eines Fahrzeugs 1 durch ein Fahrassistenzsystem, insbesondere ein Parkassistenzsystem gesteuert wird. Dieses Parkszenario bezieht sich beispielsweise auf eine Einpark-Situation, in der das Fahrzeug 1 in eine senkrecht zur Fahrbahn FB ausgerichtete Parklücke bewegt wird. Es versteht sich, dass die Erfindung auch auf andere Fahrmanöver bzw. Parkszenarios anwendbar ist, in denen das Fahrzeug 1 beispielsweise parallel oder im Wesentlichen parallel bzw. schräg zur Fahrbahn FB in einer Parklücke steht.

Unabhängig vom jeweiligen Parkszenario ist es durch das Parkassistenzsystem des Fahrzeugs 1 möglich, dass ein Einparkvorgang bzw. Ausparkvorgang durch einen Fahrzeugnutzer 4 unter Verwendung eines mobilen Fernbediengeräts 2 ferngesteuert wird. Dabei befindet sich der Fahrzeugnutzer 4 und das ihm zugeordnete mobile Fernbediengerät 2 nicht im Inneren des Fahrzeugs 1 sondern der Fahrzeugnutzer 4 und das mobile Fernbediengerät 2 befinden sich außerhalb des Fahrzeugs 1 in räumlicher Nähe zu diesem, beispielsweise in einem Abstand kleiner als 10 m insbesondere kleiner als 6 m.

Das mobile Fernbediengerät 2 kann dabei durch gängige Drahtloskommunikationsverbindungen mit dem Fahrzeug 1 gekoppelt sein, so dass zwischen dem Fernbediengerät 2 und dem Fahrzeug 1 zumindest eine unidirektionale, vorzugsweise eine bidirektionale Datenübertragung erfolgen kann. Die Drahtloskommunikationsverbindung kann beispielsweise folgende Übertragungsverfahren benutzen: Bluetooth, WLAN, ZigBee, NFC, Wibree oder WiMAX. Alternativ ist grundsätzlich auch eine optische Kommunikationsverbindung oder eine Kommunikationsverbindung über das Mobilfunknetz denkbar.

Das Fernbediengerät 2 kann beispielsweise durch einen Fahrzeugschlüssel, ein Telekommunikationsgerät, beispielsweise ein Handy, Smartphone, Tablet, Laptop etc. gebildet werden. Im Falle der Verwendung von Telekommunikationsgeräten weisen diese vorzugsweise eine Applikation (APP) auf, über die der Datenaustausch mit dem Fahrzeug 1, insbesondere dem Parkassistenzsystem des Fahrzeugs 1 erfolgt.

Figur 2 zeigt ein schematisches Blockschaltbild eines Fahrzeugs 1 mit einem Fahrassistenzsystem 10. Das Fahrassistenzsystem 10 weist in an sich bekannter Weise eine Steuereinheit 10.1 auf, mittels der beispielsweise Parkassistenzfunktionen gesteuert werden. Zudem ist eine Umgebungserfassungssensorik 5 vorgesehen, mittels der in der räumlichen Umgebung des Fahrzeugs 1 befindliche Objekte erfassbar sind. Derartige Objekte können beispielsweise weitere parkende Fahrzeuge, Gebäude, Randsteine etc. sein. Die Umgebungserfassungssensorik 5 umfasst mehrere Kameras. Zudem kann die Umgebungserfassungssensorik 5 weitere Sensoren umfassen, beispielsweise Abstandssensoren in Form von Ultraschallsensoren. Des Weiteren können auch andere Sensortypen vorgesehen sein, beispielsweise zumindest ein Radarsensor.

Die Umgebungserfassungssensorik 5 ist mit der Steuereinheit 10.1 gekoppelt. Dadurch können die von der Umgebungserfassungssensorik 5 erfassten Informationen an die Steuereinheit 10.1 übertragen werden, so dass diese daraus beispielsweise freie Parklücken detektieren kann.

Das Fahrassistenzsystem 10 umfasst ferner ein Kommunikationsmodul 11 mit einer Schnittstelle 12. Über dieses Kommunikationsmodul 11 bzw. die Schnittstelle 12 können Informationen mit dem mobilen Fernbediengerät 2 ausgetauscht werden. Insbesondere können von der Umgebungserfassungssensorik 5 erfasste Umgebungsinformationen von dem Fahrzeug 1 an das mobile Fernbediengerät 2 übertragen werden.

Das Fahrzeug 1 oder das mobile Fernbediengerät 2 sind vorzugsweise dazu ausgebildet, aus den von den zumindest zwei Kameras bereitgestellten Bildinformationen dreidimensionale Umgebungsinformationen zu erzeugen.

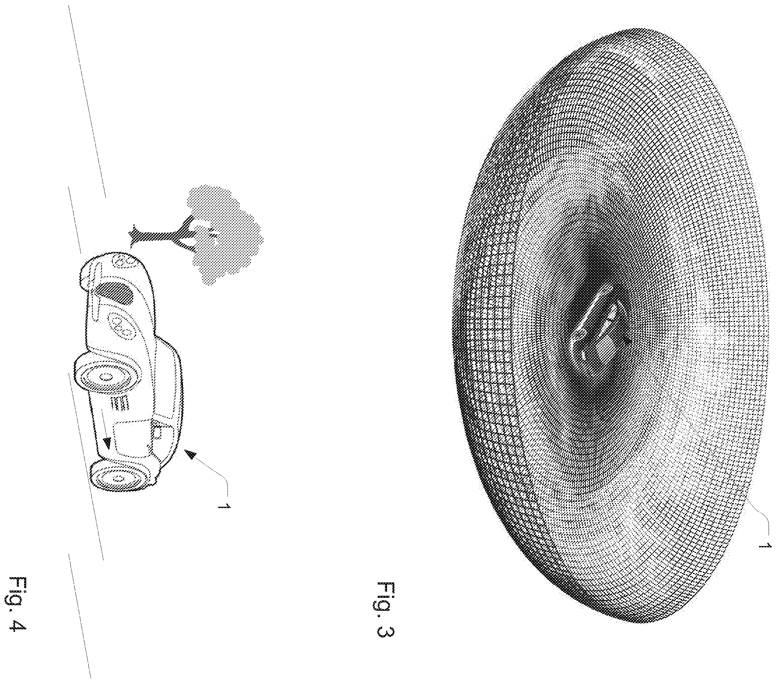

Fig. 3 zeigt beispielhaft eine perspektivische Darstellung des dreidimensionalen Raums im Umgebungsbereich des Fahrzeugs 1. Eine solche Darstellung wird beispielsweise als 3D-bowl bezeichnet. Aus den von den Kameras bereitgestellten Bildinformationen können entweder durch eine fahrzeugseitig vorgesehene Steuereinheit oder eine Rechnereinheit des mobilen Fernbediengeräts 2 räumlich perspektivische Umgebungsinformationen berechnet werden. Bei diesen räumlich perspektivischen Umgebungsinformationen ist vorzugsweise das Fahrzeug selbst bzw. dessen Kontur erkennbar. Diese Art der seitlich perspektivischen Rund-um-Sicht-Darstellung ermöglicht, im Gegensatz zu einer Draufsicht-Darstellung (Vogelperspektive), die perspektivische Betrachtung des Umgebungsbereichs des Fahrzeugs 1 von einem bestimmten Bezugspunkt bzw. Betrachtungspunkt aus. Dabei kann der Bezugspunkt bzw. Betrachtungspunkt variiert werden, d.h. es kann die virtuelle Position, von der aus das Fahrzeug und dessen Umgebung betrachtet werden, geändert werden (virtuelle Bewegung in der 3D-bowl). Dadurch wird eine realistischere Darstellung des Umgebungsbereichs des Fahrzeugs 1 erreicht.

In Figur 4 ist schematisch ein Umgebungsbereich um ein Fahrzeug 1 gezeigt, wobei das Fahrzeug 1 einen Rückwärts-Einparkvorgang in eine Parklücke vollzieht (siehe Pfeil für die Fahrtrichtung). Das Parkszenario entspricht dem in Fig. 1 in einer Draufsichtdarstellung gezeigten Szenario, und zwar von dem Standpunkt des Fahrzeugnutzers 4 aus, der den Parkvorgang von seiner Position außerhalb des Fahrzeugs 1 steuert. Wie in Fig. 4 erkennbar, wird das in Fig. 1 erkennbare Objekt 6 in der Darstellung gemäß Fig. 4 vom Fahrzeug 1 verdeckt, so dass der Fahrzeugnutzer 4 dieses Objekt 6 von seiner Betrachtungsposition aus nicht erkennen kann.

Vorteilhafterweise weist das mobile Fernbediengerät 2 eine Anzeigeeinheit 2.2 auf, auf der die räumlich perspektivischen Umgebungsinformationen darstellbar sind.

Der Bezugspunkt für die räumlich perspektivische Darstellung der Umgebungsinformationen, d.h. der Punkt, von dem aus der Umgebungsbereich perspektivisch dargestellt wird, wird vorzugsweise derart gewählt, dass der Bezugspunkt dem Standpunkt des Fahrzeugnutzers 4 entspricht. Dazu können Lageinformationen bzw. Ausrichtinformationen, d.h. beispielsweise x-, y- und z-Koordinaten und Winkelinformationen, die eine Verschwenkung des Fernbediengerätes 2 um zumindest eine Raumachse, vorzugsweise zwei oder drei Raumachsen angeben, von dem Fernbediengerät 2 an das Fahrzeug 1 übertragen werden. Alternativ oder zusätzlich können die Lageinformationen des Fernbediengerätes 2 durch geeignete Ortungsverfahren auch vom Fahrzeug 1 aus bestimmt werden. Anhand dieser Lageinformationen und vorzugsweise auch Ausrichtinformationen kann bestimmt werden, welcher Ausschnitt des Umgebungsbereichs durch die räumlich perspektivischen Umgebungsinformationen an der Anzeigeeinheit 2.2 des Fernbediengerätes 2 angezeigt werden sollen. Bevorzugt ist das genau der Bereich, den der Fahrzeugnutzer 4 selbst sieht, wenn er ohne das Fernbediengerät 2 frei nach vorne blickt. Dieser Umgebungsbereich, wie ihn der Fahrzeugnutzer 4 ohne Fernbediengerät 2 selbst wahrnimmt, ist beispielhaft in Fig. 4 gezeigt.

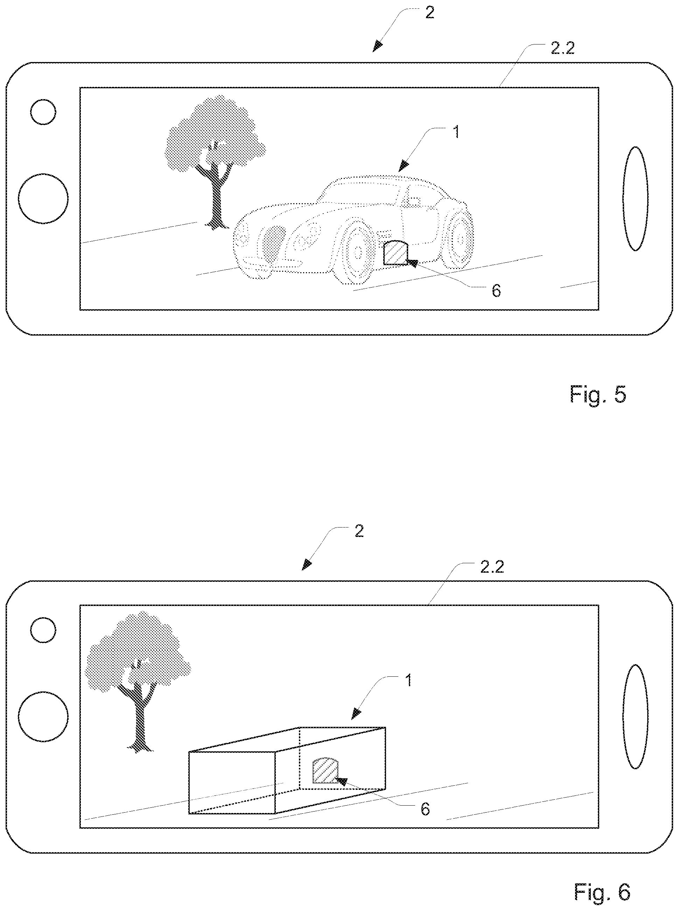

Fig. 5 zeigt eine Darstellung eines Fernbediengeräts 2 (z.B. in Form eines Smartphones), auf dessen Anzeigeeinheit 2.2 der Umgebungsbereich um das Fahrzeug 1 dargestellt ist, und zwar als räumlich perspektivische Umgebungsinformationen, wie sie durch den Fahrzeugnutzer 4 von dessen Betrachtungsposition aus wahrnehmbar sind.

Der wesentliche Unterschied der auf der Anzeigeeinheit 2.2 dargestellten räumlich perspektivischen Umgebungsinformationen zu den real vom Fahrzeugnutzer 4 wahrnehmbaren Umgebungsinformationen (s. Fig. 4) besteht darin, dass das Fahrzeug 1 bzw. dessen Außenkontur zumindest teilweise transparent dargestellt ist, so dass auch der Bereich, der durch das Fahrzeug 1 verdeckt wird (rechts hinter dem Fahrzeug), sichtbar ist. Dies ist im gezeigten Ausführungsbeispiel insbesondere das Objekt 6, das sich hinter dem rechten, hinteren Eck des Fahrzeugs 1 befindet. In anderen Worten wird damit bei der Darstellung der räumlich perspektivischen Umgebungsinformationen ein virtuelles Hindurchsehen durch das Fahrzeug 1 ermöglicht.

Die auf der Anzeigeeinheit 2.2 dargestellten Informationen können auf unterschiedliche Weise gewonnen werden. Zum einen können die auf der Anzeige der Anzeigeeinheit 2.2 darzustellenden Informationen in einer fahrzeugseitigen Steuereinheit des Fahrassistenzsystems 10 erzeugt und drahtlos, beispielsweise über einen Mobilfunkkanal, an das Fernbediengerät 2 übertragen werden. Vorab können dem Fahrassistenzsystem 10 von dem Fernbediengerät 2 Lageinformationen bzw. Ausrichtinformationen übermittelt werden, damit das Fahrassistenzsystem 10 gezielt den Bezugspunkt bzw. den Betrachtungspunkt für die räumlich perspektivischen Umgebungsinformationen wählen kann.

Alternativ hierzu können von dem Fahrzeug 1 mehrere, von unterschiedlichen Kameras des Fahrzeugs 1 erfasste Bildinformationen an das Fernbediengerät 2 übertragen werden. Die empfangenen Bildinformationen werden dann durch eine Rechnereinheit 2.1 des Fernbediengeräts 2 zu dreidimensionalen Umgebungsinformationen (s. Fig. 3) zusammengesetzt. Um die räumlich perspektivischen Umgebungsinformationen zu erhalten, wird anschließend der Bezugspunkt basierend auf den Lageinformationen bzw. Ausrichtinformationen des Fernbediengeräts 2 gewählt und damit der Ausschnitt der dreidimensionalen Umgebungsinformationen festgelegt, der die räumlich perspektivischen Umgebungsinformationen bestimmt.

Das Fernbediengerät 2 kann eine Zoomfunktion bieten, um den Zoomfaktor der räumlich perspektivischen Umgebungsinformationen verändern zu können, beispielsweise um einen bestimmten Umgebungsbereich besser sichtbar zu machen.

Fig. 6 zeigt eine weitere Darstellung analog zu der gemäß Fig. 5, wobei der wesentliche Unterschied darin besteht, dass die Kontur des Fahrzeugs als transparentes quaderförmiges Objekt dargestellt wird. Auch andere Objektkonturformen sind grundsätzlich denkbar. Der wesentliche Vorteil dieser Darstellung besteht darin, dass durch die Darstellung der Kanten für den Fahrzeugnutzer der Abstand des Fahrzeugs 1 zu einem hinter dem Fahrzeug befindlichen Objekt, insbesondere dem Objekt 6, optisch erkennbar ist.

Zur Verdeutlichung des Abstand des Fahrzeugs 1 zu einem in der Nähe befindlichen Objekt können zudem weitere optische Informationen in den räumlich perspektivischen Umgebungsinformationen dargestellt werden, beispielsweise balkenartige Informationen, die durch eine Abstandssensorik, beispielsweise Ultraschallsensoren bereitgestellt werden.

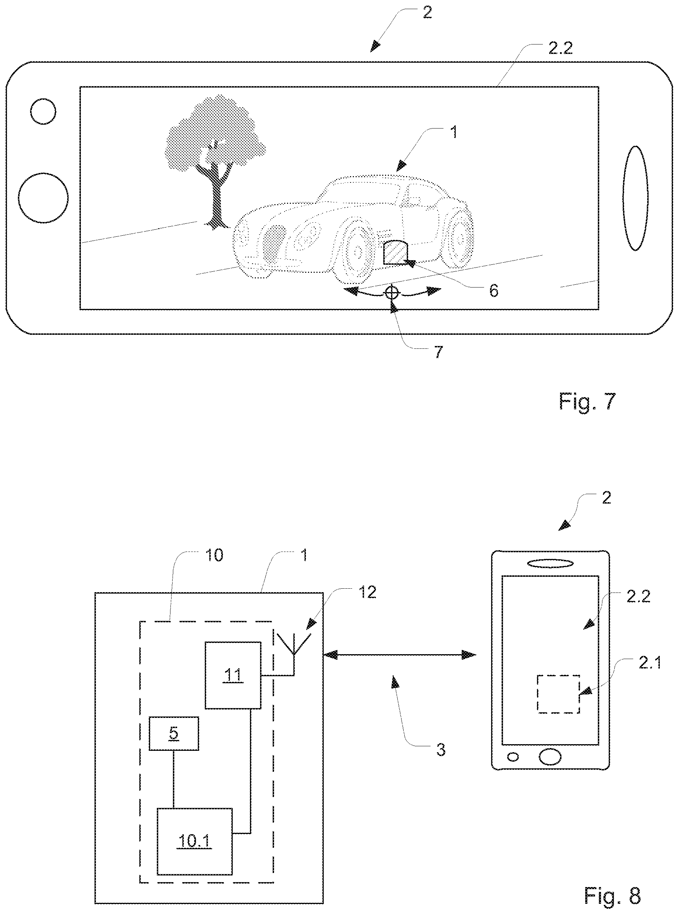

Fig. 7 zeigt eine Darstellung des mobilen Fernbediengeräts 2 mit darauf dargestellten räumlich perspektivischen Umgebungsinformationen vergleichbar mit der Darstellung gemäß Fig. 5.

Im Unterschied zu der Darstellung gemäß Fig. 5 weist das Fernbediengerät 2 Steuermittel 7 auf, über die der Bezugspunkt bzw. Betrachtungspunkt der räumlich perspektivischen Umgebungsinformationen änderbar ist. Die Steuermittel 7 werden im gezeigten Ausführungsbeispiel durch eine auf der Anzeigeeinheit 2.2 dargestellte Steuermarkierung (im gezeigten Beispiel cursorartig ausgebildet) gebildet.

Vorzugsweise kann durch ein Einwirken des Fahrzeugnutzers 4 auf die Steuermittel 7, wie in der Figur 7 durch das Pfeilpaar dargestellt, der Bezugspunkt bzw. Betrachtungspunkt der räumlich perspektivischen Umgebungsinformationen verlagert werden. Beispielsweise kann der Fahrzeugnutzer 4 durch Antippen bzw. Verschieben der Steuermittel 7 den Bezugspunkt bzw. Betrachtungspunkt, der aktuell vor dem linken vorderen Eck des Fahrzeugs 1 liegt, auf die rechte Seite verlagern, so dass der rechte Umgebungsbereich des Fahrzeugs 1, der in den aktuell dargestellten räumlich perspektivischen Umgebungsinformationen lediglich durch das Fahrzeug 1 bzw. dessen Außenkontur hindurch erkennbar ist, direkt sichtbar wird. In anderen Worten kann damit durch Einwirken auf die Steuermittel 7 der Betrachtungswinkel, aus dem der Umgebungsbereich um das Fahrzeug herum betrachtet wird, geändert werden. Vorzugsweise erfolgt dies ohne physische Lageänderung des Standpunkts des Fahrzeugnutzers 4 sondern lediglich durch eine Änderung des virtuellen Betrachtungspunkts in der räumlich perspektivischen Gesamtdarstellung des Umgebungsbereichs des Fahrzeugs 1. Dies bietet den Vorteil, dass der Fahrzeugnutzer quasi virtuell über das Einwirken auf die Steuermittel 7 um das Fahrzeug 1 herumgehen kann und den Umgebungsbereich des Fahrzeugs von unterschiedlichen Positionen aus betrachten kann, ohne seine Position selbst verändern zu müssen.

Fig. 8 zeigt eine schematische Funktionsdarstellung eines Fahrzeugs 1, das über einen drahtlosen Kommunikationskanal 3 mit einem mobilen Fernbediengerät 2 gekoppelt ist. Das Fahrassistenzsystem 10 des Fahrzeugs 1 weist eine Steuereinheit 10.1 auf, das mit einem Kommunikationsmodul 11 mit einer Schnittstelle 12 gekoppelt ist. Über die Schnittstelle 12 ist das Fahrassistenzsystem 10 mit dem mobilen Fernbediengerät 2 über einen drahtlosen Kommunikationskanal 3 gekoppelt. Der drahtlose Kommunikationskanal 3 kann insbesondere ein Mobilfunckanal sein. Über den drahtlosen Kommunikationskanal 3 können von der Umgebungserfassungssensorik 5 bereitgestellte Umgebungsinformationen (Bilddaten einzelner Kameras oder davon abgeleitete räumlich perspektivische Bildinformationen) an das Fernbediengerät 2 übertragen werden. Das Fernbediengerät 2 weist eine Rechnereinheit 2.1 und eine Anzeigeeinheit 2.2 auf, um die räumlich perspektivischen Bildinformationen anzeigen zu können. Dabei können die räumlich perspektivischen Bildinformationen entweder direkt von dem Fahrassistenzsystem 10 empfangen werden, oder das Fahrassistenzsystem 10 liefert mehrere Bildinformationen von unterschiedlichen fahrzeugseitigen Kameras und die Rechnereinheit 2.1 des Fernbediengeräts 2 berechnet daraus die räumlich perspektivischen Bildinformationen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fahrzeug
- 2: mobile Fernbediengerät
- 2.1: Rechnereinheit
- 2.2: Anzeigeeinheit
- 3: drahtloser Kommunikationskanal
- 4: Fahrzeugnutzer
- 5: Umgebungserfassungssensorik
- 6: Objekt
- 7: Steuermittel

- 10: Fahrassistenzsystem
- 10.1: Steuereinheit
- 11: Kommunikationsmodul
- 12: Schnittstelle (fahrzeugseitig)

- FB: Fahrbahn

## Patentansprüche

1. Verfahren zur Überwachung und Steuerung eines fernbedienten Park- oder Manövriervorgangs eines Fahrzeugs (1), umfassend folgende Schritte:
- Erfassen von Bildinformationen im Umgebungsbereichs des Fahrzeugs (1) durch zumindest zwei Kameras des Fahrzeugs (1);
- Erstellen von räumlich perspektivischen Umgebungsinformationen basierend auf den Bildinformationen der zumindest zwei Kameras;
- Darstellen der räumlich perspektivischen Umgebungsinformationen an einem mobilen Fernbediengerät (2);
- Steuern des Park- oder Manövriervorgangs mittels des mobilen Fernbediengeräts (2) basierend auf den räumlich perspektivischen Umgebungsinformationen,
wobei die Darstellung der räumlich perspektivischen Umgebungsinformationen eine zumindest teilweise transparente Darstellung des Fahrzeugs (1) oder dessen Außenkontur umfasst, so dass ein Umgebungsbereich, der sich bezogen auf den Bezugspunkt der perspektivischen Ansicht der Umgebungsinformationen verdeckt hinter dem Fahrzeug (1) befindet, zumindest teilweise sichtbar wird.

2. Verfahren nach Anspruch 1, **dadurch gekennzeichnet, dass** in den räumlich perspektivischen Umgebungsinformationen zumindest ein Teil der Außenkonturen des Fahrzeugs (1) erkennbar sind.

3. Verfahren nach einem der vorhergehenden Ansprüche, **dadurch gekennzeichnet, dass** der Bezugspunkt der dargestellten räumlich perspektivischen Umgebungsinformationen basierend auf der örtlichen Lage des mobilen Fernbediengeräts (2) und dessen Ausrichtung gewählt wird.

4. Verfahren nach einem der vorhergehenden Ansprüche, **dadurch gekennzeichnet, dass** der Zoomfaktor der räumlich perspektivischen Umgebungsinformationen an dem mobilen Fernbediengerät (2) veränderbar ist.

5. Verfahren nach einem der vorhergehenden Ansprüche, **dadurch gekennzeichnet, dass** der Bezugspunkt der dargestellten räumlich perspektivischen Umgebungsinformationen durch eine Benutzereingabe am mobilen Fernbediengerät (2) veränderbar ist.

6. Verfahren nach einem der vorhergehenden Ansprüche, **dadurch gekennzeichnet, dass** die Darstellung der räumlich perspektivischen Umgebungsinformationen mit Informationen überlagert werden, die von einer weiteren Sensorik, insbesondere einer Abstandssensorik erfasst wurden.

7. Verfahren nach einem der vorhergehenden Ansprüche, **dadurch gekennzeichnet, dass** die am mobilen Fernbediengerät (2) dargestellten, räumlich perspektivischen Umgebungsinformationen durch eine fahrzeugseitige Steuereinheit bereitgestellt und über einen drahtlosen Kommunikationskanal (3) an das mobile Fernbediengerät (2) übertragen werden.

8. Verfahren nach einem der Ansprüche 1 bis 6, **dadurch gekennzeichnet, dass** die von den Kameras des Fahrzeugs (1) ermittelten Bildinformationen über einen drahtlosen Kommunikationskanal (3) an das mobile Fernbediengerät (2) übertragen werden und eine Rechnereinheit (2.1) des mobile Fernbediengeräts (2) die räumlich perspektivischen Umgebungsinformationen basierend auf den Bildinformationen erzeugt.

9. Fahrassistenzsystem für ein Fahrzeug (1) mit einer Steuereinheit (10.1), die zur Kommunikation mit einer Antriebseinheit und einer Lenkeinheit des Fahrzeugs (1) ausgebildet ist, um die Antriebseinheit und Lenkeinheit mittels Steuerinformationen bei der Durchführung eines fahrerlosen Fahrmanövers zu steuern, wobei das Fahrassistenzsystem (10) ein Kommunikationsmodul (11) aufweist, das zur Kommunikation mit einem mobilen Fernbediengerät (2) ausgebildet ist, wobei das Fahrassistenzsystem (10) zudem aufweist:
- eine fahrzeugseitige Schnittstelle (12) zum Versenden von Bildinformationen oder davon abgeleiteter räumlich perspektivischer Umgebungsinformationen vom Umgebungsbereich des Fahrzeugs (1) an ein mobiles Fernbediengerät (2);
- ein mobiles Fernbediengerät (2) mit einer Anzeigeeinheit (2.2), die zur Anzeige von räumlich perspektivischen Umgebungsinformationen des Umgebungsbereichs des Fahrzeugs (1) ausgebildet ist, wobei das mobile Fernbediengerät (2) entweder zur Erzeugung der räumlich perspektivischen Umgebungsinformationen aus den empfangenen Bildinformationen oder zum Empfang dieser räumlich perspektivischen Umgebungsinformationen von der fahrzeugseitigen Schnittstelle (12) ausgebildet ist;
wobei das mobile Fernbediengerät (2) Steuermittel aufweist, über die die das fahrerlose Fahrmanöver basierend auf den angezeigten räumlich perspektivischen Umgebungsinformationen steuerbar ist, wobei die Darstellung der räumlich perspektivischen Umgebungsinformationen eine zumindest teilweise transparente Darstellung des Fahrzeugs (1) oder dessen Außenkontur umfasst, so dass ein Umgebungsbereich, der sich bezogen auf den Bezugspunkt der perspektivischen Ansicht der Umgebungsinformationen verdeckt hinter dem Fahrzeug (1) befindet, zumindest teilweise sichtbar wird.

10. Fahrzeug umfassend ein Fahrassistenzsystem (10) gemäß Anspruch 9.

## Claims

1. Method for monitoring and controlling a remote-controlled parking or manoeuvring operation of a vehicle (1), comprising the following steps of:
- capturing image information in the surrounding area of the vehicle (1) by means of at least two cameras of the vehicle (1);
- creating spatially perspective surroundings information on the basis of the image information from the at least two cameras;
- presenting the spatially perspective surroundings information on a mobile remote control device (2);
- controlling the parking or manoeuvring operation by means of the mobile remote control device (2) on the basis of the spatially perspective surroundings information,
wherein the presentation of the spatially perspective surroundings information comprises an at least partially transparent presentation of the vehicle (1) or its outer contour, with the result that a surrounding area which is concealed behind the vehicle (1) based on the reference point of the perspective view of the surroundings information becomes at least partially visible.

2. Method according to Claim 1, **characterized in that** at least one part of the outer contours of the vehicle (1) can be seen in the spatially perspective surroundings information.

3. Method according to one of the preceding claims, **characterized in that** the reference point of the presented spatially perspective surroundings information is selected on the basis of the local position of the mobile remote control device (2) and its orientation.

4. Method according to one of the preceding claims, **characterized in that** it is possible to change the zoom factor of the spatially perspective surroundings information on the mobile remote control device (2).

5. Method according to one of the preceding claims, **characterized in that** the reference point of the presented spatially perspective surroundings information can be changed by means of a user input on the mobile remote control device (2).

6. Method according to one of the preceding claims, **characterized in that** the presentation of the spatially perspective surroundings information is superimposed with information captured by a further sensor system, in particular a distance sensor system.

7. Method according to one of the preceding claims, **characterized in that** the spatially perspective surroundings information presented on the mobile remote control device (2) is provided by a vehicle control unit and is transmitted to the mobile remote control device (2) via a wireless communication channel (3).

8. Method according to one of Claims 1 to 6, **characterized in that** the image information determined by the cameras of the vehicle (1) is transmitted to the mobile remote control device (2) via a wireless communication channel (3), and a computer unit (2.1) of the mobile remote control device (2) generates the spatially perspective surroundings information on the basis of the image information.

9. Driving assistance system for a vehicle (1) having a control unit (10.1) which is designed to communicate with a drive unit and a steering unit of the vehicle (1) in order to control the drive unit and steering unit by means of control information when carrying out a driverless driving manoeuvre, wherein the driving assistance system (10) has a communication module (11) which is designed to communicate with a mobile remote control device (2), wherein the driving assistance system (10) also has:
- a vehicle interface (12) for transmitting image information, or spatially perspective surroundings information derived therefrom, from the surrounding area of the vehicle (1) to a mobile remote control device (2);
- a mobile remote control device (2) having a display unit (2.2) which is designed to display spatially perspective surroundings information relating to the surrounding area of the vehicle (1), wherein the mobile remote control device (2) is designed to either generate the spatially perspective surroundings information from the received image information or receive this spatially perspective surroundings information from the vehicle interface (12);
wherein the mobile remote control device (2) has control means which can be used to control the driverless driving manoeuvre on the basis of the displayed spatially perspective surroundings information, wherein the presentation of the spatially perspective surroundings information comprises an at least partially transparent presentation of the vehicle (1) or its outer contour, with the result that a surrounding area which is concealed behind the vehicle (1) based on the reference point of the perspective view of the surroundings information becomes at least partially visible.

10. Vehicle comprising a driving assistance system (10) according to Claim 9.

## Revendications

1. Procédé de surveillance et de commande d'une opération de stationnement ou de manoeuvre commandée à distance d'un véhicule (1), comprenant les étapes suivantes :
- acquisition d'informations d'image dans la zone environnante du véhicule (1) par au moins deux caméras du véhicule (1) ;
- création d'informations d'environnement en perspective dans l'espace en se basant sur les informations d'image des au moins deux caméras ;
- représentation des informations d'environnement en perspective dans l'espace sur un terminal de commande à distance mobile (2) ;
- commande de l'opération de stationnement ou de manoeuvre au moyen du terminal de commande à distance mobile (2) en se basant sur les informations d'environnement en perspective dans l'espace,
la représentation des informations d'environnement en perspective dans l'espace comportant une représentation au moins partiellement transparente du véhicule (1) ou de son contour extérieur, de sorte qu'une zone environnante, qui se trouve masquée derrière le véhicule (1) par rapport au point de référence de la vue en perspective des informations d'environnement, soit au moins partiellement visible.

2. Procédé selon la revendication 1, **caractérisé en ce qu'**au moins une partie du contour extérieur du véhicule (1) est reconnaissable dans les informations d'environnement en perspective.

3. Procédé selon l'une des revendications précédentes, **caractérisé en ce que** le point de référence des informations d'environnement en perspective dans l'espace représentées est choisi en fonction de la situation locale du terminal de commande à distance mobile (2) et sont orientation.

4. Procédé selon l'une des revendications précédentes, **caractérisé en ce que** le facteur de grossissement des informations d'environnement en perspective dans l'espace sur le terminal de commande à distance mobile (2) est modifiable.

5. Procédé selon l'une des revendications précédentes, **caractérisé en ce que** le point de référence des informations d'environnement en perspective dans l'espace représentées peut être modifié par une saisie d'utilisateur sur le terminal de commande à distance mobile (2).

6. Procédé selon l'une des revendications précédentes, **caractérisé en ce que** la représentation des informations d'environnement en perspective dans l'espace est superposée à des informations qui ont été acquises par un système capteur supplémentaire, notamment un système capteur de distance.

7. Procédé selon l'une des revendications précédentes, **caractérisé en ce que** les informations d'environnement en perspective dans l'espace représentées sur le terminal de commande à distance mobile (2) sont fournies par une unité de commande côté véhicule et transmises au terminal de commande à distance mobile (2) par le biais d'un canal de communication sans fil (3).

8. Procédé selon l'une des revendications 1 à 6, **caractérisé en ce que** les informations d'image déterminées par les caméras du véhicule (1) sont transmises au terminal de commande à distance mobile (2) par le biais d'un canal de communication sans fil (3) et une unité de calcul (2.1) du terminal de commande à distance mobile (2) génère les informations d'environnement en perspective dans l'espace en se basant sur les informations d'image.

9. Système d'assistance à la conduite pour un véhicule (1), comprenant une unité de commande (10.1) qui est configurée pour la communication avec une unité de propulsion et une unité de direction du véhicule (1) afin de commander l'unité de propulsion et l'unité de direction au moyen d'informations de commande lors de l'exécution d'une manoeuvre de conduite sans conducteur, le système d'assistance à la conduite (10) possédant un module de communication (11) qui est configuré pour la communication avec un terminal de commande à distance mobile (2), le système d'assistance à la conduite (10) possédant en outre :
- une interface côté véhicule (12) destinée à envoyer des informations d'image ou des informations d'environnement en perspective dans l'espace dérivées de celles-ci de la zone environnante du véhicule (1) à un terminal de commande à distance mobile (2) ;
- un terminal de commande à distance mobile (2) comprenant une unité d'affichage (2.2), qui est configurée pour afficher des informations d'environnement en perspective dans l'espace de la zone environnante du véhicule (1), le terminal de commande à distance mobile (2) étant configuré soit pour générer les informations d'environnement en perspective dans l'espace à partir des informations d'image reçues, soit pour recevoir ces informations d'environnement en perspective dans l'espace depuis l'interface côté véhicule (12) ;
le terminal de commande à distance mobile (2) possédant des moyens de commande par le biais desquels la manoeuvre de conduite sans conducteur peut être commandée en se basant sur les informations d'environnement en perspective dans l'espace affichées, la représentation des informations d'environnement en perspective dans l'espace comportant une représentation au moins partiellement transparente du véhicule (1) ou de son contour extérieur, de sorte qu'une zone environnante, qui se trouve masquée derrière le véhicule (1) par rapport au point de référence de la vue en perspective des informations d'environnement, soit au moins partiellement visible.

10. Véhicule comprenant un système d'assistance à la conduite pour un véhicule (10) selon la revendication 9.
